# EUROPEAN PATENT SPECIFICATION

(11) **EP 2 463 547 B1**
(45) Date of publication and mention of the grant of the patent: **19.02.2014**
(21) Application number: 10425380.2
(22) Date of filing: 10.12.2010
(51) Int. Cl.: F16G 13/16, H02G 11/00

(54) **Side link energy chain having reduced noise emission**
Energieführungskette mit Nebenverbindung mit verminderter Geräuschemission
Chaîne d'énergie muni d'un maillon latéral permettant une émission sonore réduite

(43) Date of publication of application: 13.06.2012
(73) Proprietor: Findalto S.r.l., 20052 Monza (MB) (IT)
(72) Inventor: Mauri, Giovanni, 20052 Monza (MB) (IT)
(74) Representative: Riccardi, Sergio

(56) References cited:
- WO-A1-2005/021996
- DE-A1- 19 928 889

## Description

The present invention relates to an energy chain, and more particularly to an energy chain provided with side link reducing noise emitted during operation thereof.

In the art various systems and devices for absorbing vibrations and corresponding noise emitted by impact of adjacent side link portions have been proposed. In almost all of the energy chains stop members are provided between interconnected side links in order to limit rotation relative to each other. Such systems and/or devices generally comprise dampening elements placed at said stop members or elastic elements suitably disposed in the adjacent side link pivot connection in order to counteract the relative rotation thereof and slowing down a side link going to impact a stop member. However those known systems do not provide an effective deceleration of side link rotation mainly because elastic element, since it definitively constrains a side link to the adjacent one, cannot be size as enough rigid - otherwise it would excessively counteract side link relative rotation - thus not providing a fast deceleration. Moreover this limited freedom in dimensioning the elastic member leads to a low reliability of the same in respect of the requirements imposed by the typical applications of an energy chain.

An energy chain side link of this kind is disclosed in DE 199 28 889 A1 and WO 2005/021996 A1.

Therefore the main object of the present invention is to provide side links of an energy chain with an improved slowdown of their relative rotation which allows a reduced noise emitted during operation.

A further object of the present invention is to provide side links of an energy chain in which the elements slowing down their relative rotation can be dimensioned in order to allow a given reliability level.

A detailed description of a preferred embodiment of the present invention will be now provided with reference to the annexed drawings in which:
fig. 1 is a perspective view of a preferred embodiment of a side link for an energy chain according to the present invention,
fig. 1A is an enlarged perspective view of a first detail of fig. 1,
fig. 1B is an enlarged perspective view of a second detail of fig. 1,
fig. 2 is a perspective view of two interconnected adjacent side links in fig. 2 aligned to each other,
fig. 3 is a perspective view of interconnected adjacent side links in fig. 2 rotated relative to each other at maximum angle allowed,
fig. 4 is a perspective view of a second embodiment of a side link for an energy chain according to the present invention;
fig. 4A is an enlarged perspective view of a first detail of fig. 4,
fig. 4B is an enlarged perspective view of a second detail of fig. 4,
fig. 5 is a perspective view of two interconnected adjacent side links in fig. 4 aligned to each other, and
fig. 6 is a perspective view of interconnected adjacent side links in fig. 4 rotated relative to each other at maximum angle allowed.

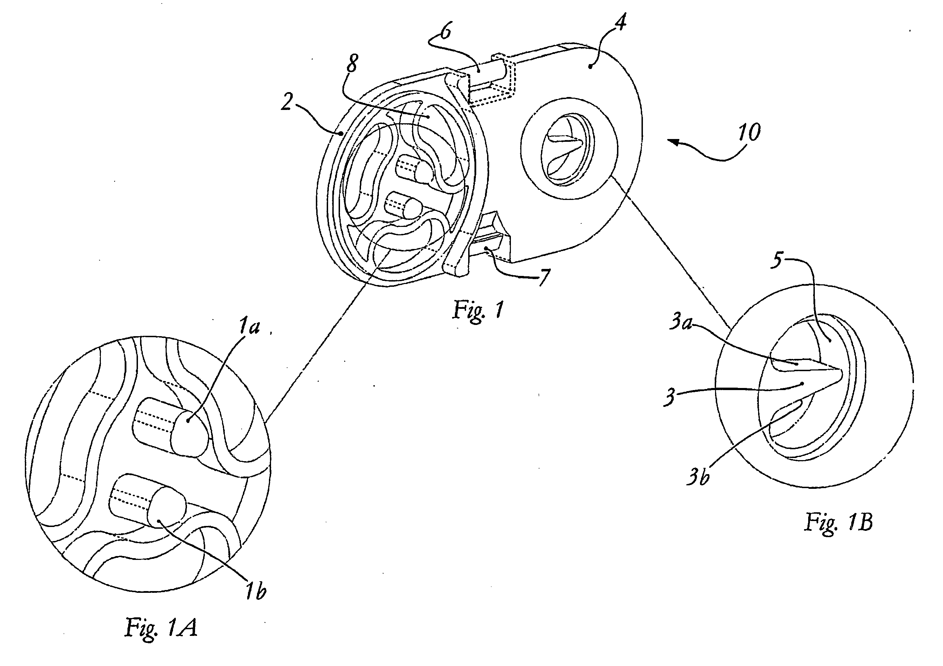

Referring now to fig. 1, a side link 10 of an energy chain according to a preferred embodiment of the present invention is provided; said side link 10 comprises a male portion 2 and a female portion 4. As shown in fig. 1A, male portion is provided with a pair of profiled members 1a and 1b, respectively, and with a set of three annular slots 8 in which corresponding members (not shown) pivotally slide thus having rotation stop function. Moreover, a pair of members 6 and 7 are integrally formed on upper and lower portions of said side link 10, respectively, at approximatively middle cross section thereof: an upper transverse link (not shown) engages at its first end member 6 of right side link 10 and at its second end member 6 of left side link 10, while a lower transverse link (not shown) engages at its first end member 7 of right side link 10 and at its second end member 7 of left side link 10, thus defining a mesh of the energy chain according to the present invention. Fig. 1B shows female portion provided with a circumferentially shaped hole which houses an inner ring 5 integral with an elastic element 3 radially protruding from a peripheral portion of said ring 5. The elastic element 3 therefore has a first end fixed to ring 5 and a second free end being at almost diametrically opposite position in respect of the above first end. Moreover, the elastic element 3 is provided with a rectangular cross section linearly decreasing in its area from fixed end to free end thereof, thus forming two opposite converging flat surfaces 3a and 3b, respectively.

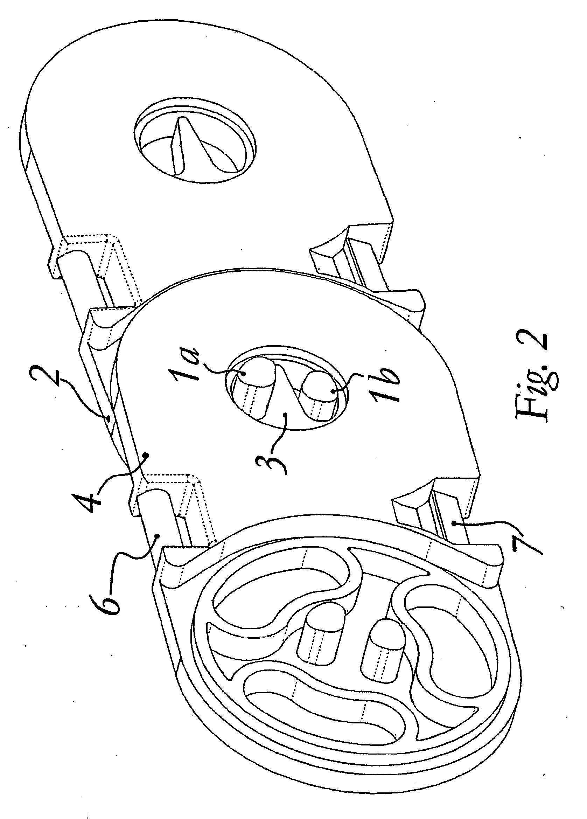

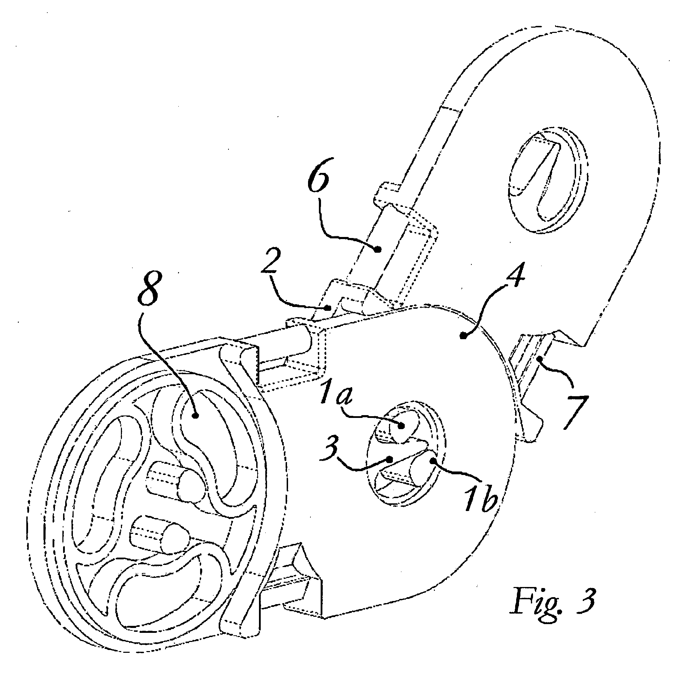

Turning to fig. 2, there are shown two adjacent side links 10 interconnected to each other by coupling male portion 2 of first side link to female portion 4 of second side link such that profiled members 1a and 1b of first side link engage upper inner surface of ring 5 of second side link and lateral surface 3a of elastic element 3 and lower inner surface of ring 5 of second side link and lateral surface 3b of elastic member 3, respectively. Said profiled members 1a and 1b are arranged in respect of each other within male portion 2 of first side link and profiled in order to roll over corresponding surface 3a and 3b of elastic element 3 within female portion 4 of second side link and to slide on corresponding portion of ring peripheral inner surface: in such manner sliding of profiled members 1a and 1b on the inner peripheral surface of ring 5 assures the required interference fit coupling between male and female portions of adjacent side links 10 and, simultaneously, rolling of the profiled members 1a and 1b over lateral surfaces 3a and 3b, respectively, of the elastic element 3 assures the required slowdown force interacting between male and female portions of the same adjacent side links 10. Said profiled members 1a and 1b are also mutually arranged so that in their rotation movement in respect of the elastic element 3 one rolls substantially from free end to fixed end thereof whilst the other rolls substantially from fixed end to free end of the above elastic element 3. For example, considering a rotation leading the coupled side links 10 from initial position shown in fig. 2 and a final position shown in fig. 3 - corresponding to the maximum angle allowed therebetween - the profiled member 1a rolls over elastic element surface 3a from free end to fixed end and the profiled member 1b rolls over elastic element surface 3b from fixed end to free and: thereby such mutual arrangement of profiled members 1a and 1b causes the profiled member 1b to contact and bend free end of elastic member 3 being, in turn, stiffened by supporting action of the profiled member 1a at a position downstream of elastic member the fixed end, thus decreasing the lever arm of profiled member 1b or increasing the counteracting torque, which is the same. It is also clear that the just described operation is complementary in case of a rotation having opposing direction, in which profiled member 1b functions as support whilst profiled member 1a bends free end of elastic member 3 against its counteracting torque.

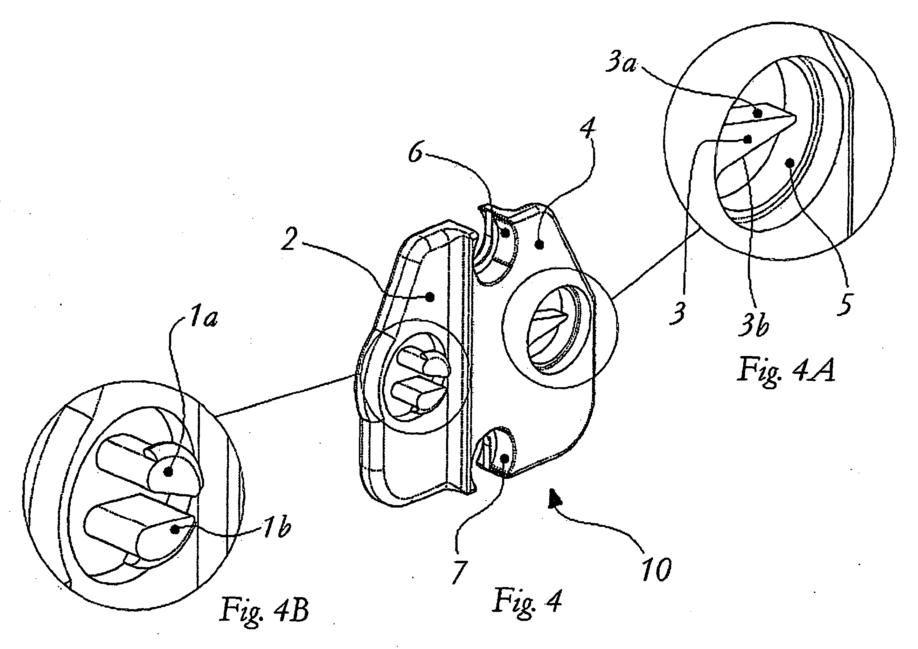

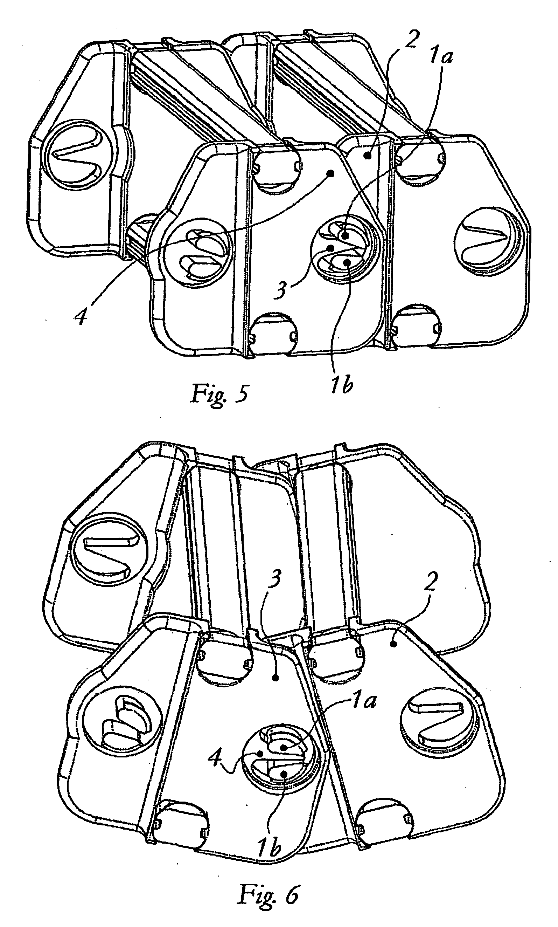

Figs. 4 to 6 show an alternative embodiment of the present invention in which a side links 10 are formed in a more compact way and are equally provided with an analogous elastic member 3 in respect of the preferred embodiment and with a pair of profiled members 1a and 1b being shaped in order to have a longer surfaces engaging said elastic member 3, thus increasing rigidity when consecutive side links 10 result in alignment. Operation of such alternative embodiment is similar to the one of the preferred embodiment and will be therefore herein omitted.

Likewise all other known energy chains, stop members (not shown) are provided on each side link for limiting the relative rotation range allowed by design: for this reason the counteracting torque effect must be selected in order to gain the desired slowdown of side link before it impact such stop member, which causes the noise emitted by the energy chain.

As can be noticed in the figures, the preferred embodiment of the present invention herein depicted is provided with members 1a and 1b each profiled approximatively as a wedge having rounded corners, that is a profile formed by curved portions alternated with rectilinear portions: curved portions roll over and contact lateral surface of elastic element while supporting or bending it, rectilinear portions instead quickly move (the more the rectilinear portion is long, the more the movement is quick) contact point of profiled member with lateral surface from fixed end to free or vice versa depending on the rotation direction. The profiled members shown is the simplest possible to reach the results of the present invention, such profiles further being symmetrical, that is an equal profile engages the inner peripheral surface of the ring for coupling purposes. It is clear that any other profile configuration can be suited to the object of the present invention depending on the requirements of rotation range, speed rotation, counteracting torque alteration and any other parameter related to particular application of energy chain adopting side links of the present invention. Similarly and accordingly, a different cross section could be provided for the elastic member 3 together with a different variation of the same along longitudinal axis, thus obtaining different lateral surfaces best fitting profiles of members rolling over them. All of these modifications and variations in respect of the preferred embodiment described with no limits fall in the scope of the present invention as recited in the following claims.

## Claims

1. A side link (10) for energy chain comprising:
(i) a male portion (2) and a female portion (4), each male portion (2) being able to be pivotally coupled with female portion (4) of an adjacent side link (10),
and **characterised in that**:
(ii) an elastic elongated member (3) is fixed at one end to female portion (4), and
(iii) at least a pair of profiled members (1a, 1b) is provided on said male portion (2),
in which, during a relative rotation of adjacent side links (10), one (1a, 1b) of said profiled members stiffens said elastic member (3) by supporting one side thereof towards fixed end, as the other (1b, 1a) of said profiled members bends said elastic member (3) by rolling over the other side towards free end thereof.

2. The side link (10) according to claim 1, in which said female portion (4) comprises a hole and said elastic member (3) protrudes radially from a portion (5) of the hole periphery.

3. The side link (10) according to claim 2, in which said elastic member (3) has its free end at almost the diametrically opposite position in respect of the portion (5) it protrudes from.

4. The side link (10) according to claim 2, in which said elastic member (3) has a cross section area decreasing from its fixed end to its free end.

5. The side link (10) according to one or more of preceding claims, in which said elastic member (3) has flat sides (3a, 3b).

6. The side link (10) according to claim 1, in which each profiled member (1a, 1b) is approximatively wedge-shaped.

## Patentansprüche

1. Seitenglied (10) für eine Energieführungskette mit den folgenden Merkmalen:
(i) mit einem Federteil (2) und einem Nutteil (4), worin der Federteil (2) mit dem Nutteil (4) eines benachbarten Seitenglieds (10) schwenkbar gekuppelt werden kann, **dadurch gekennzeichnet, dass**
(ii) ein federndes längliches Element (3) ein an das Nutteil (4) fixiertes Ende aufweist, und
(iii) das Federteil (2) mit einem Paar geformte Elemente (1a, 1b) versehen ist, worin, bei einer gegenseitigen Drehung von benachbarten Seitengliedern (10), das eine (1a, 1b) geformte Element eine Seite des federnden Elements (3) bei seinem fixierten Ende hält und versteift, während das andere (1b, 1a) geformte Element das federnde Element (3) biegt, indem es auf die andere Seite bei seinem freien Ende rollt.

2. Seitenglied (10) nach Anspruch 1, worin das Nutteil (4) ein Loch aufweist und das federnde Element (3) aus einem Lochumfangsteil (5) radial hinausrägt.

3. Seitenglied (10) nach Anspruch 2, worin das freie Ende des federnden Elements (3) etwa an der diametral entgegengesetzten Stellung bezüglich des Lochumfangsteils (5) vorliegt.

4. Seitenglied (10) nach Anspruch 2, worin das federnde Element (3) einen Querschnitt aufweist, dessen Flächeninhalt vom fixierten Ende bis zum freien Ende abnimmt.

5. Seitenglied (10) nach den vorigen Ansprüchen, worin das federnde Element (3) flache Seiten (3a, 3b) aufweist.

6. Seitenglied (10) nach Anspruch 1, worin die geformten Elemente (1a, 1 b) etwa keilförmig sind.

## Revendications

1. Maillon latéral (10) pour chaîne d'énergie comprenant:
(i) une partie mâle (2) et une partie femelle (4), chaque partie mâle (2) pouvant être connectée pivotant avec la partie femelle (4) d'un maillon latéral (10) adjacent et **caractérisé en ce que**
(ii) un élément élongé élastique (3) est fixé par une extrémité à la partie femelle (4); et
(iii) au moins une paire des éléments profilés (1a, 1b) est prévue sur la partie mâle (2), dont, pendant une rotation rélative des maillons latéraux adjacents (10), un (1a, 1 b) des elements profiles raidit le dit element élastique (3) supportant un de ses côtés vers l'extrémité fixe, tandis que l'autre (1 b, 1 a) des elements profiles fléchit le dit element élastique (3) en roulant sur l'autre côté vers son extrémité libre.

2. Maillon latéral (10) selon la revendication 1, dont la partie femelle (4) comprend un trou et l'élément élastique (3) fait saillie radialement d'une partie (5) de la périférie du trou.

3. Maillon latéral (10) selon la revendication 2, dont l'élément élastique (3) a son extrémité libre environ dans la position diamétralement opposée à l'égard de la partie (5) de laquelle il fait saillie.

4. Maillon latéral (10) selon la revendication 2, dont l'élément élastique (3) a une surface en coupe transversale décroissante de son extrémité fixe jusqu'à l'extrémité libre.

5. Maillon latéral (10) selon les revendications précédentes, dont l'élément élastique (3) a des côtés plans.

6. Maillon latéral (10) selon la revendication 1, dont chaque element profilé (1a, 1 b) est à peu près cunéiforme.
